# EUROPEAN PATENT APPLICATION

(11) **EP 4 838 608 A1**
(43) Date of publication of application: **11.11.2026**
(21) Application number: 25855533.3
(22) Date of filing: 18.02.2025
(51) Int. Cl.: H01M 10/0567

(54) **BATTERY CELL, BATTERY DEVICE AND ELECTRIC DEVICE**

(30) Priority: 22.08.2024 CN 202411161592
(71) Applicant: Contemporary Amperex Technology Co., Limited, Ningde, Fujian 352100 (CN)
(72) Inventor: LIU, Huanji, Ningde, Fujian 352100 (CN); JING, Erdong, Ningde, Fujian 352100 (CN); SUN, Xin, Ningde, Fujian 352100 (CN); CHEN, Xiao, Ningde, Fujian 352100 (CN); HE, Yong, Ningde, Fujian 352100 (CN); SHI, Wei, Ningde, Fujian 352100 (CN)
(74) Representative: Aera A/S
(86) International application number: PCT/CN2025/077893
(87) International publication number: WO 2026/040353

(57) **Abstract**

A battery cell (5), a battery device and an electric device. The battery cell (5) comprises: a positive electrode sheet, which comprises a positive electrode film layer, wherein the positive electrode film layer comprises a first area and a second area, the first area comprises iron and phosphorus, the molar ratio of phosphorus to iron being 0.5-1.5, and the second area comprises phosphorus and a transition metal M, the molar ratio of phosphorus to the transition metal M being a, and a satisfying 0 ≤ a ≤ 0.2; a negative electrode sheet; and an electrolyte, which comprises an additive, wherein the additive comprises one or more of a phosphorus-containing additive, a fluorine-containing additive and a sulfur-containing additive, and on the basis of the total mass of the electrolyte, the sum of the mass of the phosphorus-containing additive, the fluorine-containing additive and the sulfur-containing additive accounts for 0.2-2.1%. Therefore, the cycle life of a battery is prolonged, and the energy density thereof is improved.

## Description

### TECHNICAL FIELD

The present application relates to the field of batteries, and in particular, to a battery cell, a battery device and an electric device.

### BACKGROUND

Batteries are used not only in energy storage power systems such as hydropower, thermal power, wind power, and solar power plants, but also in electric tools such as electric bicycles, electric motorcycles, and electric vehicles, as well as military equipment, aerospace, and many other fields. Long-duration energy storage products typically have a service life of more than 20 years, and thus there is a high requirement for the life of batteries. Incorporating a prelithiation agent into a positive electrode can prolong the life of a battery to some extent, but the improvement in the life is limited. Moreover, the battery has a low energy density, making it difficult to meet the requirements of lightweight and miniaturization. Since the prelithiation agent needs to be decomposed under a high-voltage condition, there is also a problem of incompatibility between an electrolyte and positive and negative electrodes under the high-voltage condition.

### SUMMARY

In a first aspect of the present application, provided is a battery cell. The battery cell comprises: a positive electrode sheet, wherein the positive electrode sheet comprises a positive electrode current collector and a positive electrode film layer located on at least one side of the positive electrode current collector, and the positive electrode film layer comprises a plurality of first areas and a plurality of second areas; the first areas comprise a positive electrode active material, the first areas comprise iron and phosphorus, and the molar ratio of the phosphorus to the iron is 0.5-1.5; the second areas comprise a prelithiation agent, the second areas comprise the phosphorus and a transition metal M, the transition metal M comprises one or more of Ni, Co, V, Cr, Mn, Fe, Mo, Cu, and Zn, and the molar ratio of the phosphorus to the transition metal M is a, wherein 0 ≤ a ≤ 0.2; a negative electrode sheet, wherein the negative electrode sheet comprises a negative electrode current collector and a negative electrode film layer located on at least one side of the negative electrode current collector; and an electrolyte, wherein the electrolyte comprises an additive, the additive comprises one or more of a phosphorus-containing additive, a fluorine-containing additive, and a sulfur-containing additive, and on the basis of the total mass of the electrolyte, the sum of the mass of the phosphorus-containing additive, the fluorine-containing additive, and the sulfur-containing additive accounts for 0.2-2.1%. Therefore, the capacity and structural stability of the positive electrode active material are improved, thereby improving the stability of the electrolyte under a high voltage condition, increasing the capacity of a battery, and prolonging the cycle life thereof.

According to some embodiments of the present application, the positive electrode active material comprises lithium iron phosphate, and a maximum diameter of the lithium iron phosphate is less than a minimum diameter of the prelithiation agent. Therefore, the kinetics of lithium intercalation and deintercalation of the positive electrode active material are improved, and a side reaction between the prelithiation agent and the electrolyte is reduced.

According to some embodiments of the present application, the ratio of a maximum diameter of the prelithiation agent to the minimum diameter of the prelithiation agent is 1.2-2.5. Therefore, the lithium deintercalation efficiency is improved, and the risk that the prelithiation agent is fractured during calendaring is lowered.

According to some embodiments of the present application, the prelithiation agent comprises LiₓM_{y}O_{z}, wherein 1 ≤ x ≤ 5, 1 ≤ y ≤ 3, and 2 ≤ z ≤ 8. Therefore, a prelithiation effect is enhanced, and the initial Coulombic efficiency of the battery cell is improved.

According to some embodiments of the present application, the prelithiation agent comprises one or both of Li₂NiO₂ and Li₅FeO₄.

According to some embodiments of the present application, the prelithiation agent comprises one or both of LiₙNiOₘ and LiₑFeO_{f}, wherein 0 < m ≤ 2, 0 ≤ n ≤ 2, 0 ≤ e ≤ 5, and 0 < f ≤ 4.

According to some embodiments of the present application, the prelithiation agent comprises one or both of NiOₘ and LiₚFeO_{q}, wherein 0 < m ≤ 2, 0 ≤ p ≤ 1, and 0 < q ≤ 2.

Therefore, the decomposition of the prelithiation agent can compensate for active lithium ions consumed for forming an SEI film, thereby improving the initial Coulombic efficiency of the battery cell, and improving the energy density thereof.

According to some embodiments of the present application, the electrolyte further comprises an electrolyte salt, and the molar concentration of the electrolyte salt in the electrolyte is 1.1-1.5 mol/L. Therefore, during charging and discharging, concentration polarization caused by migration of lithium ions can be reduced, thereby minimizing impact of the concentration polarization on a transport rate of the lithium ions, reducing an internal resistance of the battery cell, and improving the charging and discharging efficiency of the battery cell.

According to some embodiments of the present application, the electrolyte salt comprises one or both of lithium hexafluorophosphate and fluorine-containing lithium sulfonimide. Therefore, the conductivity of the battery cell is improved.

According to some embodiments of the present application, the negative electrode film layer comprises a negative electrode active material, and the negative electrode active material comprises graphite. Therefore, costs of the battery cell are reduced, the energy density of the battery cell is improved, and the cycle life thereof is prolonged.

According to some embodiments of the present application, a compaction density of the positive electrode film layer is 2.2-2.6 g/cm³, and optionally 2.4-2.5 g/cm³. Therefore, the energy density of the battery cell is improved.

According to some embodiments of the present application, the coating weight of the positive electrode film layer is 20-60 mg/cm², and optionally 40-50 mg/cm². Therefore, the energy density of the battery cell is improved.

According to some embodiments of the present application, the degree of graphitization of the graphite is 93-97%, and optionally 93-96%. Therefore, the capacity of the graphite is increased, and the energy density of the battery cell is improved.

According to some embodiments of the present application, the volume mean diameter Dv50 of the graphite is 8-20 µm, and optionally 10-16 µm. Therefore, the quantity of active sites of the graphite can be reduced, thereby reducing the Li consumption for forming the SEI film, and prolonging the cycle life of the battery cell.

According to some embodiments of the present application, a compaction density of the negative electrode film layer is 1.3-1.7 g/cm³, and optionally 1.4-1.6 g/cm³. Therefore, the energy density of the battery cell is improved.

According to some embodiments of the present application, the coating weight of the negative electrode film layer is 10-26 mg/cm², and optionally 15-20 mg/cm². Therefore, the energy density of the battery cell is improved.

According to some embodiments of the present application, the electrolyte further comprises a solvent, the solvent comprises a cyclic carbonate and a linear carbonate, and on the basis of the total mass of the electrolyte, the mass percentage of the cyclic carbonate is 15-25%, and the mass percentage of the linear carbonate is 50-70%. Therefore, the stability of the electrolyte is improved, and the life of the battery is prolonged.

According to some embodiments of the present application, the cyclic carbonate comprises ethylene carbonate.

According to some embodiments of the present application, the linear carbonate comprises one or both of dimethyl carbonate and ethyl methyl carbonate.

According to some embodiments of the present application, the additive further comprises a carbonate-based additive, and the carbonate-based additive comprises one or more of vinylene carbonate, propylene carbonate, and vinyl ethylene carbonate. Therefore, an SEI film containing a high polymer is formed, thereby improving the stability of the SEI film and prolonging the life of the battery.

According to some embodiments of the present application, on the basis of the total mass of the electrolyte, the mass percentage of the carbonate-based additive is 2-5%, and optionally 3-4%. Therefore, an SEI film containing a high polymer is formed, thereby improving the stability of the SEI film and prolonging the life of the battery.

According to some embodiments of the present application, on the basis of the total mass of the electrolyte, the mass percentage of the phosphorus-containing additive is 0.01-0.05%.

According to some embodiments of the present application, on the basis of the total mass of the electrolyte, the mass percentage of the fluorine-containing additive is 0.05-0.5%.

According to some embodiments of the present application, on the basis of the total mass of the electrolyte, the mass percentage of the sulfur-containing additive is 0.1-2%.

Therefore, by keeping the content of the phosphorus-containing additive, the fluorine-containing additive, and the sulfur-containing additive within the above ranges, a dense solid electrolyte film (CEI film) can be formed on a positive electrode during initial charging, thereby reducing the probability of oxidation of the electrolyte.

According to some embodiments of the present application, the phosphorus-containing additive comprises one or more of lithium difluorophosphate, tris(trimethylsilyl) phosphate, triphenylphosphine oxide, triethyl phosphate, and trifluoroethyl vinyl phosphate.

According to some embodiments of the present application, the fluorine-containing additive comprises one or more of fluoroethylene carbonate, difluoroethylene carbonate, perfluoroalkyl ethylene carbonate, lithium tetrafluoroborate, and lithium difluoro(oxalato)borate.

According to some embodiments of the present application, the sulfur-containing additive comprises one or more of ethylene sulfite, propylene sulfite, ethylene sulfate, 4-methyl ethylene sulfite, and 1,3-propanesultone.

Therefore, a dense solid electrolyte film (CEI film) can be formed on the positive electrode during initial charging, thereby reducing the probability of oxidation of the electrolyte.

According to some embodiments of the present application, the lithium iron phosphate has a unimodal particle size distribution and a particle size distribution span of 1.5-1.7. Therefore, the kinetics of lithium intercalation and deintercalation are improved.

According to some embodiments of the present application, on the basis of the total mass of the positive electrode film layer, the mass percentage of the positive electrode active material is 90-98%, and the mass percentage of the prelithiation agent may be 0.5-8%. Therefore, the energy density of the battery is improved, and the cycle life thereof is prolonged.

According to some embodiments of the present application, at least part of a surface of the positive electrode active material has a first carbon coating layer, and on the basis of the total mass of the positive electrode active material, the mass percentage of the first carbon coating layer is 0.5-1.5%. Therefore, the electronic conductivity of the positive electrode sheet is improved.

According to some embodiments of the present application, at least part of a surface of the prelithiation agent has a second carbon coating layer, and on the basis of the total mass of the prelithiation agent, the mass percentage of the second carbon coating layer is 1-5%, and optionally 2-4%. In this way, the quantity of active sites exposed on a surface of the prelithiation agent is reduced, and a side reaction between the prelithiation agent and the electrolyte is reduced.

According to some embodiments of the present application, the positive electrode film layer further comprises a conductive agent, and the conductive agent comprises one or more of superconducting carbon, acetylene black, carbon black, Ketjen black, carbon dots, carbon nanotubes, graphene, and carbon nanofibers. Therefore, the conductivity of the positive electrode sheet is improved.

According to some embodiments of the present application, the battery cell further comprises: a separator, wherein the separator comprises: a base film, comprising polyethylene; a binding layer, located on at least one side of the base film; and a ceramic layer, located on a side of the binding layer away from the base film. Therefore, the oxidation resistance of the separator is improved.

According to some embodiments of the present application, the separator is arranged between the positive electrode sheet and the negative electrode sheet, and the ceramic layer is close to the positive electrode sheet. Therefore, the oxidation resistance of the separator is improved.

According to some embodiments of the present application, a volumetric energy density of the battery cell is greater than or equal to 410 Wh/L.

According to some embodiments of the present application, the volumetric energy density of the battery cell is greater than or equal to 420 Wh/L.

In a second aspect of the present application, provided is a battery device, comprising the battery cell provided in the first aspect of the present application.

In a third aspect of the present application, provided is an electric device, comprising the battery cell provided in the first aspect of the present application. The battery cell is configured to provide electric energy.

Additional aspects and advantages of the present application will be partly provided in the following description, and partly become evident in the following description or understood through the practice of the present application.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. In addition, the same reference numerals are used to denote the same components throughout the accompanying drawings. In the accompanying drawings:
FIG. 1 is a SEM diagram of a longitudinal section of a positive electrode sheet according to Embodiment 1 of the present application;
FIG. 2 is a schematic diagram of a battery according to an implementation of the present application;
FIG. 3 is an exploded view of the battery according to an implementation of the present application shown in FIG. 2;
FIG. 4 is a schematic diagram of a battery module according to an implementation of the present application;
FIG. 5 is a schematic diagram of a battery pack according to an implementation of the present application;
FIG. 6 is an exploded view of the battery pack according to an implementation of the present application shown in FIG. 5; and
FIG. 7 is a schematic diagram of an electric device using a battery as a power supply according to an implementation of the present application.

### Description of reference signs:

1. battery pack; 2. upper case; 3. lower case; 4. battery module; 5. battery cell; 51. housing; 52. electrode assembly; 53. cover plate; 6. lithium iron phosphate particle; and 7. prelithiation agent particle.

### DETAILED DESCRIPTION OF PREFERRED EMBODIMENTS

Embodiments of the technical solutions of the present application are described in detail below. The following embodiments are only used to more clearly illustrate the technical solutions of the present application, and thus are used as examples only, and are not intended to limit the protection range of the present application.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

Unless otherwise specified, all implementations and optional implementations of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Currently, in light of market trends, batteries are being used more widely and can be applied in energy storage power supply systems for hydropower, thermal power, wind power, and solar power stations. However, energy storage batteries in the related technologies cannot simultaneously meet the requirements of long life and high safety.

An objective of the present application is to develop a battery cell with a high energy density and a long life. The battery cell with a high energy density and a long life as disclosed herein is developed by comprehensively controlling the relative content of iron and phosphorus in a lithium iron phosphate positive electrode active material within a sheet, as well as the relative content of phosphorus and a transition metal M in a prelithiation agent area, and by matching a suitable electrolyte formulation.

In a lithium iron phosphate area of a positive electrode sheet in the present application, the molar ratio of phosphorus to iron is 0.5-1.5. On the one hand, the proportion of lithium phosphate impurities in lithium iron phosphate is reduced, thereby increasing the capacity of the battery cell. On the other hand, the content of phosphate radicals is increased, thereby improving the structural stability of the positive electrode active material, and prolonging the cycle life of the battery cell. To further prolong the cycle life of the battery and improve the energy density thereof, a prelithiation agent is incorporated into the positive electrode sheet, and the cycle life and energy density of the battery cell are made better by controlling the relative content of phosphorus and the transition metal M. However, after the prelithiation agent is incorporated into the positive electrode sheet, a high formation voltage required for the prelithiation agent to take effect tends to cause premature decomposition of electrolyte additives, rendering them incapable of exerting sustained effects during subsequent long-term cycling. Therefore, to reduce the probability of electrolyte decomposition caused by a high voltage in a formation stage, an additive such as a phosphorus-containing additive, a fluorine-containing additive, or a sulfur-containing additive is incorporated into the electrolyte in the present application, so as to improve the stability of the electrolyte at a high voltage, lower the risk of redox decomposition of the electrolyte, and improve the cycle life of the battery by utilizing the advantage of a high HOMO energy level of the additive. In addition, elements contained in the prelithiation agent material can also participate in the formation of SEI film components, thereby optimizing the impedance of the SEI film, and contributing to the cycle performance of the battery.

The battery cell proposed in the present application can be used in an electric device that uses the battery cell as a power supply, or in various energy storage systems that use the battery cell as an energy storage element. The electric device may include, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

In a first aspect of the present application, provided is a battery cell, including a positive electrode sheet, a negative electrode sheet, and an electrolyte.

The positive electrode sheet includes a positive electrode current collector and a positive electrode film layer located on at least one side of the positive electrode current collector, and the positive electrode film layer includes a plurality of first areas and a plurality of second areas; the first areas include a positive electrode active material, the first areas include iron and phosphorus, and the molar ratio of the phosphorus to the iron is 0.5-1.5; the second areas include a prelithiation agent, the second areas include the phosphorus and a transition metal M, the transition metal M includes one or more of Ni, Co, V, Cr, Mn, Fe, Mo, Cu, and Zn, and the molar ratio of the phosphorus to the transition metal M is a, where 0 ≤ a ≤ 0.2;
the negative electrode sheet includes a negative electrode current collector and a negative electrode film layer located on at least one side of the negative electrode current collector; and
the electrolyte includes an additive, the additive includes one or more of a phosphorus-containing additive, a fluorine-containing additive, and a sulfur-containing additive, and on the basis of the total mass of the electrolyte, the sum of the mass of the phosphorus-containing additive, the fluorine-containing additive, and the sulfur-containing additive accounts for 0.2-2.1%.

Therefore, while the probability of generating lithium phosphate is reduced and the capacity of the battery cell is increased, the content of phosphate radicals is increased, thereby improving the structural stability of the positive electrode active material, and prolonging the cycle life of the battery cell. By incorporating the prelithiation agent into the positive electrode sheet, the decomposition of the prelithiation agent in a formation stage can compensate for lithium ions consumed for forming an SEI film, thereby improving the initial Coulombic efficiency of the battery, and improving the energy density thereof. To reduce the probability of decomposition of the electrolyte caused by a high voltage in the formation stage, the electrolyte includes one or more of a phosphorus-containing additive, a fluorine-containing additive, and a sulfur-containing additive. Under the high voltage condition, these types of additives can preferentially decompose to form stable CEI and SEI films, which reduce the contact between the electrolyte and surfaces of the positive electrode and the negative electrode, thereby lowering the risk of oxidative decomposition of the electrolyte, improving the stability of the electrolyte under the high voltage condition, and prolonging the cycle life of the battery.

In the present application, areas in which the positive electrode active material is located are the first areas, areas in which the prelithiation agent is located are the second areas, and the first areas and the second areas are evenly distributed on the positive electrode sheet. There are significant differences in the particle diameter and P content between the positive electrode active material and the prelithiation agent: a mean particle diameter of the positive electrode active material is about 1 µm, and a maximum diameter of a single particle of the prelithiation agent is greater than 5 µm; and the P content of the positive electrode active material is greater than 20%, and the P content of the prelithiation agent is less than 0.5%. Therefore, the first areas and the second areas can be distinguished based on the particle diameter and the P content. Specifically, areas with a smaller mean particle diameter and a higher P content are the first areas in which the positive electrode active material is located, and areas with a larger maximum diameter and a lower P content are the second areas in which the prelithiation agent is located.

As an example, the molar ratio of the phosphorus to the iron in the first areas may be 0.5, 0.7, 0.9, 1.1, 1.3, 1.5, or the like, or may be within a range formed by any of the above values. By setting the molar ratio of the phosphorus to the iron within the above range, on the one hand, the risk of generating lithium phosphate due to excessive phosphorus content, which would reduce the capacity of the battery cell, is lowered. On the other hand, the risk of low phosphate radical content due to excessively low phosphorus content is lowered, thereby improving the structural stability of the positive electrode active material, and prolonging the cycle life of the battery cell.

As an example, the value of a may be 0, 0.05, 0.1, 0.15, 0.2, or the like, or may be within a range formed by any of the above values. When a is 0, the second areas do not include the phosphorus, which can increase the theoretical specific capacity of the battery cell. When 0 < a ≤ 0.2, the diffusion rate of lithium ions can be increased, and the prelithiation efficiency can be improved. By setting 0 ≤ a ≤ 0.2, the theoretical specific capacity of the battery cell is increased, and impact on the deintercalation rate of lithium ions is reduced.

In the present application, a method for identifying types and content of P, Fe, and M is as follows: The positive electrode sheet is cut along the thickness direction by using a plasma to obtain a cross section of the positive electrode sheet, and particles at different positions of the cross section are tested by using an energy dispersive spectrometer (EDS) to obtain the content of different types of elements.

In the present application, types and content of the electrolyte additives can be tested with reference to GB/T 9722-2006 (Chemical reagent-General rules for the gas chromatography). Specifically, a certain amount of electrolyte is tested by using a gas chromatograph. Components of the electrolyte are separated based on different adsorption and desorption capabilities of the components of the electrolyte in a chromatographic column, and a separated sample is then tested by using a gas chromatograph-mass spectrometer (GC-MS).

### [Positive electrode sheet]

According to some embodiments of the present application, the positive electrode active material includes lithium iron phosphate, and a maximum diameter of the lithium iron phosphate is less than a minimum diameter of the prelithiation agent. Therefore, by reducing the particle diameter of the lithium iron phosphate and increasing the particle diameter of the prelithiation agent, the lithium intercalation and deintercalation efficiency of the positive electrode active material is improved, the specific surface area of the prelithiation agent is reduced, the contact between the prelithiation agent and the electrolyte is decreased, and a side reaction between the prelithiation agent and the electrolyte is reduced, thereby improving the stability of the electrolyte, and prolonging the life of the battery cell.

A maximum diameter and a minimum diameter of a lithium iron phosphate particle or a prelithiation agent particle in the present application are defined as follows:

The positive electrode sheet including a lithium iron phosphate particle and a prelithiation agent particle is cut along the thickness direction of the sheet to expose a longitudinal section of the positive electrode film layer. A scanning electron microscope (SEM) test is performed on the longitudinal section of the positive electrode film layer to determine the maximum diameter of the lithium iron phosphate particle and the minimum diameter of the prelithiation agent particle. Specifically, the maximum diameter of the lithium iron phosphate particle is the longest straight line passing through the center point of the lithium iron phosphate particle and extending to a periphery of the particle, and the minimum diameter of the prelithiation agent is the shortest straight line passing through the center point of the prelithiation agent and extending to a periphery of the prelithiation agent.

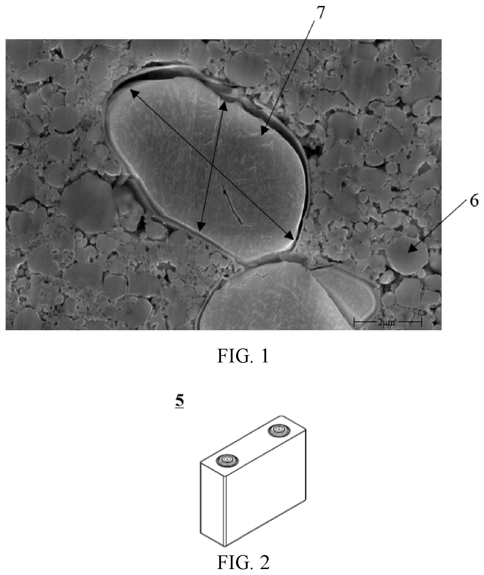

Referring to FIG. 1, FIG. 1 is a SEM diagram of a longitudinal section of a positive electrode sheet including a lithium iron phosphate particle 6 and a prelithiation agent particle 7. As shown, a minimum diameter of the prelithiation agent particle 7 is larger than a maximum diameter of the lithium iron phosphate particle 6 within the field of view, and the size of the prelithiation agent particle 7 is larger than that of the lithium iron phosphate particle 6.

According to some embodiments of the present application, the lithium iron phosphate has a unimodal particle size distribution and a particle size distribution span of 1.5-1.7. Therefore, the kinetics of lithium intercalation and deintercalation are improved.

Provided in the present application is a method for testing particle size distribution of lithium iron phosphate: Powder is scraped from the positive electrode sheet and dispersed in N-methylpyrrolidone (NMP), and then particle size distribution is tested by using a laser particle size analyzer (DLS).

According to some embodiments of the present application, the ratio of a maximum diameter of the prelithiation agent to a minimum diameter of the prelithiation agent may be 1.2-2.5. For example, the ratio may be 1.2, 1.5, 1.7, 2, 2.3, 2.5, or the like, or may be within a range formed by any of the above values. Therefore, the lithium deintercalation efficiency is improved, and the risk that the prelithiation agent is fractured during calendaring is lowered.

According to some embodiments of the present application, the prelithiation agent includes LiₓM_{y}O_{z}, where 1 ≤ x ≤ 5, 1 ≤ y ≤ 3, and 2 ≤ z ≤ 8. Therefore, the decomposition of the prelithiation agent can compensate for active lithium ions consumed for forming an SEI film, thereby improving the initial Coulombic efficiency of the battery cell, and improving the energy density thereof.

As an example, x may be 1, 2, 3, 4, 5, or the like, or may be within a range formed by any of the above values.

As an example, y may be 1, 1.5, 2, 2.5, 3, or the like, or may be within a range formed by any of the above values.

As an example, z may be 2, 3, 4, 5, 6, 7, 8, or the like, or may be within a range formed by any of the above values.

According to some embodiments of the present application, the prelithiation agent includes one or both of Li₂NiO₂ and Li₅FeO₄. Therefore, a prelithiation effect is enhanced.

According to some embodiments of the present application, when lithium in the prelithiation agent is completely deintercalated or partially deintercalated, the prelithiation agent includes one or both of LiₙNiOₘ and LiₑFeO_{f}, where 0 ≤ m ≤ 2, 0 ≤ n ≤ 2, 0 ≤ e ≤ 5, and 0 < f ≤ 4.

As an example, m may be 0.5, 1, 1.5, 2, or the like, or may be within a range formed by any of the above values.

As an example, n may be 0, 0.5, 1, 1.5, 2, or the like, or may be within a range formed by any of the above values.

As an example, e may be 0, 1, 2, 3, 4, 5, or the like, or may be within a range formed by any of the above values.

As an example, f may be 1, 2, 3, 4, or the like, or may be within a range formed by any of the above values.

According to some embodiments of the present application, when lithium in the prelithiation agent is completely deintercalated, the prelithiation agent includes one or both of NiOₘ and LiₚFeO_{q}, where 0 ≤ m ≤ 2, 0 ≤ p ≤ 1, and 0 ≤ q ≤ 2.

As an example, m may be 0.5, 1, 1.5, 2, or the like, or may be within a range formed by any of the above values.

As an example, p may be 0, 0.2, 0.4, 0.6, 0.8, 1, or the like, or may be within a range formed by any of the above values.

As an example, q may be 0.5, 1, 1.5, 2, or the like, or may be within a range formed by any of the above values.

According to some embodiments of the present application, a compaction density of the positive electrode film layer may be 2.2-2.6 g/cm³, for example, 2.2 g/cm³, 2.3 g/cm³, 2.4 g/cm³, 2.5 g/cm³ or 2.6 g/cm³, or may be within a range formed by any of the above values. Therefore, the energy density of the battery cell is improved. According to some specific embodiments of the present application, a compaction density of the positive electrode sheet may be 2.4-2.5 g/cm³.

In the present application, the compaction density of the positive electrode film layer is determined by measuring the mass (g/cm²) per unit area of the positive electrode film layer and the thickness (cm) per unit area of the positive electrode film layer. Specifically, the compaction density of the positive electrode film layer = (the mass per unit area of the positive electrode sheet - the mass per unit area of the positive electrode current collector)/(the thickness of the positive electrode sheet - the thickness of the positive electrode current collector).

According to some embodiments of the present application, the coating weight of the positive electrode film layer may be 20-60 mg/cm², for example, 20 mg/cm², 30 mg/cm², 40 mg/cm², 50 mg/cm² or 60 mg/cm², or may be within a range formed by any of the above values. Therefore, the energy density of the battery cell is improved. According to some specific embodiments of the present application, the coating weight of the positive electrode film layer is 40-50 mg/cm².

It should be noted that the coating weight of the positive electrode film layer referred to here is the coating weight of the positive electrode film layer on both sides of the positive electrode current collector.

In the present application, a method for testing the coating weight of the positive electrode film layer is as follows: A positive electrode sheet is taken, then a coated middle area and a tab area are punched by using a fixed-size mold, where the mass of the positive electrode film layer on both sides of the positive electrode sheet in the middle area is m₁, the mass of the positive electrode film layer on both sides of the positive electrode sheet in the tab area is m₂, the coating mass of a single-sided positive electrode film layer is (m₁ - m₂)/S, and S is the area of the mold.

According to some embodiments of the present application, on the basis of the total mass of the positive electrode film layer, the mass percentage of the positive electrode active material may be 90-98%, and the mass percentage of the prelithiation agent may be 0.5-8%. Therefore, a prelithiation effect is enhanced, and the energy density of the battery cell is improved.

As an example, the mass percentage of the positive electrode active material may be 90%, 92%, 94%, 96%, 98%, or the like, or may be within a range formed by any of the above values.

As an example, the mass percentage of the prelithiation agent may be 0.5%, 1%, 3%, 5%, 7%, 8%, or the like, or may be within a range formed by any of the above values.

According to some embodiments of the present application, at least part of a surface of the positive electrode active material has a first carbon coating layer, and on the basis of the total mass of the positive electrode active material, the mass percentage of the first carbon coating layer may be 0.5-1.5%, for example, 0.5%, 0.7%, 0.9%, 1.1%, 1.3% or 1.5%, or may be within a range formed by any of the above values. Therefore, the conductivity of the positive electrode active material is improved.

According to some embodiments of the present application, at least part of a surface of the prelithiation agent has a second carbon coating layer, and on the basis of the total mass of the prelithiation agent, the mass percentage of the carbon coating layer is 1-5%. For example, the mass percentage may be 1%, 2%, 3%, 4%, 5%, or the like, or may be within a range formed by any of the above values. Therefore, by reducing the quantity of active sites on a surface of the prelithiation agent through the second carbon coating layer, the consumption of active lithium is reduced during the formation of the SEI film, thereby improving the initial Coulombic efficiency of the battery cell, and improving the energy density thereof. According to some specific embodiments of the present application, on the basis of the total mass of the prelithiation agent, the mass percentage of the second carbon coating layer may be 2-4%.

According to some embodiments of the present application, the positive electrode film layer further includes a conductive agent, and the conductive agent includes one or more of superconducting carbon, acetylene black, carbon black, Ketjen black, carbon dots, carbon nanotubes, graphene, and carbon nanofibers. Therefore, the conductivity of the positive electrode sheet is improved.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some embodiments, the electrode sheet may be prepared by the following method: The components for preparing the positive electrode sheet, such as the positive electrode active material, the prelithiation agent, the conductive agent, the binder, and any other components are dispersed in a solvent (such as N-methylpyrrolidone) to form a positive electrode slurry; and then, the positive electrode slurry is coated on the positive electrode current collector. After processes such as drying and cold-pressing, the positive electrode sheet can be obtained.

### [Negative electrode sheet]

The negative electrode sheet includes a negative electrode current collector and a negative electrode film layer located on at least one side of the negative electrode current collector, the negative electrode film layer includes a negative electrode active material, and the negative electrode active material includes graphite.

According to some embodiments of the present application, the degree of graphitization of the graphite is ≥ 93%, for example, 93%, 94%, 95%, 96%, 97% or 98%, or may be within a range formed by any of the above values. Therefore, the capacity of the graphite is increased, and the energy density of the battery cell is improved. According to some specific embodiments of the present application, the degree of graphitization of the graphite is 93-96%.

In the present application, a method for testing the degree of graphitization of the graphite is as follows: Powder is scraped from the negative electrode film layer on the negative electrode sheet and tested by using an X-ray diffractometer (XRD), then the (002) interplanar spacing (d₀₀₂ = nλ/sinθ) is calculated using the Bragg equation, and the degree of graphitization P = (1 - (d₀₀₂ - 0.3354)/(0.344 - 0.3354)) × 100%.

According to some embodiments of the present application, the volume mean diameter Dv50 of the graphite is 8-20 µm, for example, 8 µm, 10 µm, 12 µm, 14 µm, 16 µm, 18 µm or 20 µm, or may be within a range formed by any of the above values. Therefore, the volume mean diameter of the graphite is increased, the specific surface area of the graphite is reduced, the quantity of active sites on a surface of the graphite is reduced, and the consumption of active lithium is reduced during the formation of the SEI film. According to some specific embodiments of the present application, the volume mean diameter Dv50 of the graphite is 10-16 µm.

In the present application, Dv50 is a corresponding particle diameter when the cumulative volume distribution percentage reaches 50%, for example, measured by using a laser particle size analyzer (Malvern Master Size 2000) with reference to the standard GB/T 19077-2016/ISO 13320:2009. The specific test process is as follows: An appropriate amount of sample to be tested is taken (with a sample concentration sufficient to ensure 8-12% opacity), 20 ml of deionized water is added and subjected to ultrasonic treatment for 5 min (53 KHz/120 W) to ensure that the sample is completely dispersed, and then the sample is measured in accordance with the standard GB/T19077-2016/ISO 13320:2009.

According to some embodiments of the present application, a compaction density of the negative electrode film layer may be 1.3-1.7 g/cm³, for example, 1.3 g/cm³, 1.4 g/cm³, 1.5 g/cm³, 1.6 g/cm³ or 1.7 g/cm³, or may be within a range formed by any of the above values. Therefore, the energy density of the battery cell is improved. According to some specific embodiments of the present application, the compaction density of the negative electrode film layer is 1.4-1.6 g/cm³.

In the present application, the compaction density of the negative electrode film layer is determined by measuring the mass (g/cm²) per unit area of the negative electrode film layer and the thickness (cm) per unit area of the negative electrode film layer. Specifically, the compaction density of the negative electrode film layer = (the mass per unit area of the negative electrode sheet - the mass per unit area of the negative electrode current collector)/(the thickness of the negative electrode sheet - the thickness of the negative electrode current collector).

According to some embodiments of the present application, the coating weight of the negative electrode film layer is 10-26 mg/cm², for example, 10 mg/cm², 12 mg/cm², 14 mg/cm², 16 mg/cm², 18 mg/cm², 20 mg/cm², 22 mg/cm², 24 mg/cm² or 26 mg/cm², or may be within a range formed by any of the above values. Therefore, the energy density of the battery cell is improved. According to some specific embodiments of the present application, the coating weight of the negative electrode film layer is 15-20 mg/cm².

It should be noted that the coating weight of the negative electrode film layer referred to here is the coating weight of the negative electrode film layer on both sides of the negative electrode current collector.

In the present application, a method for testing the coating weight of the negative electrode film layer is as follows: A negative electrode sheet is taken, then a coated middle area and a tab area are punched by using a fixed-size mold, where the mass of the negative electrode film layer on both sides of the negative electrode sheet in the middle area is m₁, the mass of the negative electrode film layer on both sides of the negative electrode sheet in the tab area is m₂, the coating mass of a single-sided negative electrode film layer is (m₁ - m₂)/S, and S is the area of the mold.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative electrode film layer optionally further includes a binder. The binder may be selected from one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethylchitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode active material layer further optionally includes other auxiliaries, for example, a thickener (such as sodium carboxymethyl cellulose (CMC-Na)).

In some embodiments, the negative electrode sheet may be prepared by the following method: the above components for preparing the negative electrode sheet, e.g., the negative electrode active material, the conductive agent, the binder, or any other components, are dispersed in a solvent (e.g., deionized water) to form a negative electrode slurry; then, the negative electrode slurry is coated on the negative electrode current collector. After processes such as drying and cold pressing, the negative electrode sheet can be obtained.

### [Separator]

According to some embodiments of the present application, the separator includes: a base film, including polyethylene; a binding layer, located on at least one side of the base film; and a ceramic layer, located on a side of the binding layer away from the base film. Therefore, the binding layer can reduce the probability that the base film is wrinkled, and the ceramic layer can lower the risk that the separator is punctured, thereby improving the safety of the battery cell.

According to some embodiments of the present application, the separator is arranged between the positive electrode sheet and the negative electrode sheet, and the ceramic layer is close to the positive electrode sheet. Therefore, the probability of oxidation of the base film can be reduced under a high voltage condition.

### [Electrolyte]

Generally, the electrolyte includes a solvent, an electrolyte salt, and an additive.

According to some embodiments of the present application, the molar concentration of the electrolyte salt in the electrolyte may be 1.1-1.5 mol/L, for example, 1.1 mol/L, 1.2 mol/L, 1.3 mol/L, 1.4 mol/L or 1.5 mol/L, or may be within a range formed by any of the above values. Therefore, by increasing the concentration of the electrolyte salt in the electrolyte, during charging and discharging, concentration polarization caused by migration of lithium ions can be reduced, thereby increasing a transport rate of the lithium ions, and improving the charging and discharging efficiency of the battery cell.

In the present application, when the molar concentration of the electrolyte salt in the electrolyte is measured, a fixed amount of electrolyte is weighed and diluted to 1000 mL with ultrapure water, and the sample is then automatically injected into an ion chromatograph for detection. Reference may be made to the standard JY/T 020-1996 or GB/T 6040-2002.

According to some embodiments of the present application, the electrolyte salt may include one or both of lithium hexafluorophosphate and fluorine-containing lithium sulfonimide.

According to some embodiments of the present application, the additive includes one or more of a phosphorus-containing additive, a fluorine-containing additive, and a sulfur-containing additive, and on the basis of the total mass of the electrolyte, the sum of the mass of the phosphorus-containing additive, the fluorine-containing additive, and the sulfur-containing additive may account for 0.2-2.1%, for example, 0.2%, 0.4%, 0.6%, 0.8%, 1%, 1.2%, 1.4%, 1.6%, 1.8% or 2.1%, or may be within a range formed by any of the above values.

According to some embodiments of the present application, the phosphorus-containing additive includes one or more of lithium difluorophosphate (LiDFP), tris(trimethylsilyl) phosphate (TMSP), triphenylphosphine oxide (TPPO), triethyl phosphate (TEP), and trifluoroethyl vinyl phosphate (TFEOP).

According to some embodiments of the present application, the fluorine-containing additive includes one or more of fluoroethylene carbonate (FEC), difluoroethylene carbonate (DFEC), and perfluoroalkyl ethylene carbonate.

According to some embodiments of the present application, the electrolyte further includes a boron-containing additive, where the boron-containing additive includes one or more of tris(trimethylsilyl) borate (TMSB), lithium tetrafluoroborate (LiBF₄), lithium bis(oxalato)borate (LiBOB), and lithium difluoro(oxalato)borate (LiDFOB).

According to some embodiments of the present application, the sulfur-containing additive includes one or more of ethylene sulfite (ES), propylene sulfite (PS), ethylene sulfate (DTD), 4-methyl ethylene sulfite (PCS), and 1,3-propanesultone (PST).

According to some embodiments of the present application, on the basis of the total mass of the electrolyte, the mass percentage of the phosphorus-containing additive may be 0.01-0.05%, for example, 0.01%, 0.02%, 0.03%, 0.04% or 0.05%, or may be within a range formed by any of the above values.

According to some embodiments of the present application, on the basis of the total mass of the electrolyte, the mass percentage of the fluorine-containing additive may be 0.05-0.5%, for example, 0.05%, 0.1%, 0.2%, 0.3%, 0.4% or 0.5%, or may be within a range formed by any of the above values.

According to some embodiments of the present application, on the basis of the total mass of the electrolyte, the mass percentage of the sulfur-containing additive may be 0.1-2%, for example, 0.1%, 0.3%, 0.5%, 0.7%, 0.9%, 1.1%, 1.3%, 1.5%, 1.7%, 1.9% or 2%, or may be within a range formed by any of the above values.

Therefore, by adding these types and content of additives to the electrolyte, these types of additives have a high HOMO, and can preferentially decompose during initial high-voltage charging to form dense CEI and SEI films, thereby lowering the risk of oxidation of the electrolyte and prolonging the life of the battery cell.

According to some embodiments of the present application, the additive further includes a carbonate-based additive, and on the basis of the total mass of the electrolyte, the mass percentage of the carbonate-based additive is 2-5%. For example, the mass percentage may be 2%, 2.5%, 3%, 3.5%, 4%, 4.5%, 5%, or the like, or may be within a range formed by any of the above values. Therefore, an SEI film containing a high polymer is formed, thereby improving the stability of the SEI film and prolonging the life of the battery cell. According to some specific embodiments of the present application, the mass percentage of the cyclic carbonate-based additive is 3-4%.

As an example, the carbonate-based additive includes one or more of vinylene carbonate (VC), propylene carbonate, and vinyl ethylene carbonate.

As an example, the carbonate-based additive includes VC.

According to some embodiments of the present application, the solvent includes a cyclic carbonate and a linear carbonate, and on the basis of the total mass of the electrolyte, the mass percentage of the cyclic carbonate is 15-25%, and the mass percentage of the linear carbonate is 50-70%. Therefore, the stability of the electrolyte is improved.

As an example, the mass percentage of the cyclic carbonate may be 15%, 17%, 19%, 21%, 23%, 25%, or the like, or may be within a range formed by any of the above values.

As an example, the mass percentage of the linear carbonate may be 50%, 55%, 60%, 65%, 70%, or the like, or may be within a range formed by any of the above values.

According to some embodiments of the present application, the cyclic carbonate includes ethylene carbonate (EC).

According to some embodiments of the present application, the linear carbonate includes one or both of dimethyl carbonate (DMC) and ethyl methyl carbonate (EMC).

According to some embodiments of the present application, the solvent includes one or more of EC, DMC, EMC, and diethyl carbonate (DEC).

In the present application, the solvent is a substance with a mass percentage greater than or equal to 10% in the electrolyte.

The present application provides a battery device, which may be a battery module, a battery pack, an energy storage battery, or the like.

The shape of the battery cell is not particularly limited in the present application, and may be a cylindrical shape, a square shape, or any other shape. For example, FIG. 2 shows a battery cell 5 with a square structure as an example.

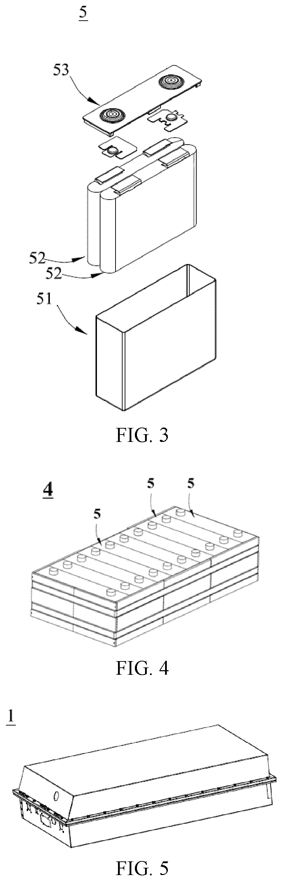

In some implementations, referring to FIG. 3, an outer package may include a housing 51 and a cover plate 53. The housing 51 may include a bottom plate and side plates connected to the bottom plate, and the bottom plate and the side plates define an accommodating chamber. The housing 51 has an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte is impregnated into the electrode assembly 52. There may be one or a plurality of electrode assemblies 52 included in the battery cell 5, and those skilled in the art may perform selection according to specific actual requirements.

In some embodiments, the battery cell may be assembled into a battery module, there may be one or a plurality of battery cells included in the battery module, and those skilled in the art may make a selection based on the application and capacity of the battery module.

FIG. 4 shows a battery module 4 as an example. Referring to FIG. 4, in the battery module 4, a plurality of battery cells 5 may be arranged sequentially in the length direction of the battery module 4. Certainly, the battery cells may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some implementations, the battery modules may be further assembled into a battery pack, and there may be one or a plurality of battery modules included in the battery pack, and the specific number may be selected by those skilled in the art according to the application and capacity of the battery pack.

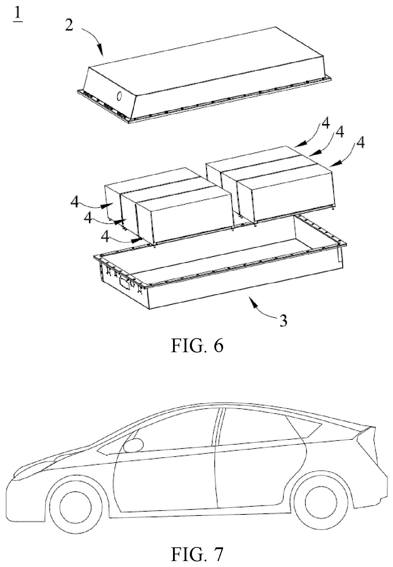

FIG. 5 and FIG. 6 show a battery pack 1 as an example. Referring to FIG. 5 and FIG. 6, a battery case and a plurality of battery modules 4 arranged in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery cell case.

In addition, the present application further provides an electric device, including at least one of the battery cell, the battery module, or the battery pack provided in the present application. The battery cell, the battery module, or the battery pack may be used as a power supply of the electric device, or may be used as an energy storage unit of the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

As the electric device, the battery cell, the battery module, or the battery pack may be selected according to use requirements.

FIG. 7 shows an electric device as an example. The electric device is a pure electric vehicle, a hybrid electric vehicle, a plug-in hybrid electric vehicle, or the like. To meet the requirements for high power and high energy density of a battery cell by the electric device, a battery pack or a battery module may be used.

In another example, the electrical apparatus may be a cell phone, a tablet computer, a notebook computer, or the like. The device is generally required to be thin and lightweight, and may use a battery cell as a power supply.

In order to make the technical problems, technical solutions, and advantageous effects solved by the embodiments of the present application clearer, the following will be further described in detail with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the present application and its applications. All other embodiments obtained by those of ordinary skill in the art based on the embodiments of the present application without making creative efforts shall fall within the protection scope of the present application.

### Embodiment 1

### 1. Positive electrode sheet

The positive electrode sheet includes an aluminum foil for a positive electrode current collector, with positive electrode film layers on both surfaces of the aluminum foil. The thickness of a single-sided positive electrode film layer is 97.4 µm, the compaction density is 2.4 g/cm³, and the coating weight of the single-sided positive electrode film layer is 23.4 mg/cm². On the basis of the total mass of the single-sided positive electrode film layer, the positive electrode film layer includes 94.3% lithium iron phosphate, 2.5% Li₅FeO₄ (with Li₃PO₄ coated on the surface) as a prelithiation agent, 1% carbon black as a conductive agent, and 2.2% polyvinylidene fluoride (PVDF) as a binder, where a maximum diameter of the lithium iron phosphate is 1.5 µm.

### 2. Negative electrode sheet

The negative electrode sheet includes a copper foil for a negative electrode current collector, with negative electrode film layers on both surfaces of the copper foil. The thickness of a single-sided negative electrode film layer is 53.8 µm, the compaction density is 1.45 g/cm³, and the coating weight of double-sided negative electrode film layers is 15.6 mg/cm². On the basis of the total mass of the single-sided negative electrode film layer, the negative electrode film layer includes 96.2% artificial graphite (the degree of graphitization is 94%) as an active substance, 0.8% carbon black as a conductive agent, 1.8% styrene butadiene rubber (SBR) as a binder, and 1.2% sodium carboxymethyl cellulose (CMC-Na) as a thickener.

### 3. Electrolyte

The electrolyte includes a solvent, an electrolyte salt, and an additive. The solvent includes EC, DMC, and EMC, where the mass ratio of EC, DMC, and EMC is 31.5:37.3:31.2; the electrolyte salt is LiPF₆, where the molar concentration of LiPF₆ is 1.2 mol/L; and the additive includes a phosphorus-containing additive, a fluorine-containing additive, a sulfur-containing additive, and a carbonate-based additive. The phosphorus-containing additive is LiDFP, and on the basis of the total mass of the electrolyte, the mass percentage of LiDFP is 0.039%. The fluorine-containing additive is FEC, LIDFOB, and LIBF₄, and on the basis of the total mass of the electrolyte, the mass percentage of FEC is 0.23%, the mass percentage of LIDFOB is 0.0246%, and the mass percentage of LIBF₄ is 0.0091%. The sulfur-containing additive is PS, and on the basis of the total mass of the electrolyte, the mass percentage of PS is 0.54%. The carbonate-based additive is VC, and on the basis of the total mass of the electrolyte, the mass percentage of VC is 3.34%.

### 4. Separator

### Polyethylene film

### 5. Battery cell

The battery cell includes a positive electrode sheet, a separator, a negative electrode sheet, and an electrolyte.

### Performance tests:

### 1. Cycle performance at 25°C

At 25°C, a corresponding battery is charged at a constant current of 1/3 C to 3.65 V, then charged at a constant voltage of 3.65 V to a current of 0.05 C, and left for 5 min, and then discharged at 1/3 C to 2.5 V. The obtained capacity is recorded as an initial capacity C₀. The above steps are repeated for the same battery, and a discharge capacity Cₙ of the battery after the n^{th} cycle is recorded, then the capacity retention rate of the battery after each cycle is Pₙ = Cₙ/C₀×100%, thus obtaining the capacity retention rate of the battery.

During the test, the first cycle corresponds to n = 1, the second cycle corresponds to n = 2, ..., and the 1000^{th} cycle corresponds to n = 1000.

### 2. Energy density

At 25°C, a corresponding battery is first weighed to record the mass m, charged at a constant current of 1/3 C to 3.65 V, then charged at a constant voltage of 3.65 V to a current of 0.05 C, and left for 5 min, and then discharged at 1/3 C to 2.5 V. This cycle is repeated for three times, and the energy at the third cycle is recorded as W, with the energy density = W/m.

### 3. Storage performance at 45°C

At 25°C, a corresponding battery is charged at a constant current of 1/3 C to 3.65 V, then charged at a constant voltage of 3.65 V to a current of 0.05 C, and left for 5 min, and then discharged at 1/3 C to 2.5 V. The obtained capacity is recorded as an initial capacity C₀. The battery is charged at 1/3 C to 3.65 V, and charged at a constant voltage to 0.05 C, then the battery is placed in a constant temperature oven at 45°C for 150 days, taken out, and discharged to 2.5 V at room temperature. After being taken out, the battery is charged at a constant current of 1/3 C at 25°C to 3.65 V, then charged at a constant voltage of 3.65 V to a current of 0.05 C, and left for 5 min, and then discharged at 1/3 C to 2.5 V. The capacity is recorded as Cₙ, and the capacity retention rate is (Cₙ/C₀)×100%.

### Comparative Example 1

The negative electrode sheet and the electrolyte in the battery cell are the same as those in Embodiment 1, except that the positive electrode film layer does not include a prelithiation agent.

### Comparative Example 2

The positive electrode sheet and the negative electrode sheet in the battery cell are the same as those in Embodiment 1, except that the electrolyte does not include a phosphorus-containing additive, a fluorine-containing additive, and a sulfur-containing additive.

### Embodiment 2 to Embodiment 4

The negative electrode sheet and the electrolyte in the battery cell are the same as those in Embodiment 1, except that the aspect ratio of the prelithiation agent is different.

### Embodiment 5

The negative electrode sheet and the electrolyte in the battery cell are the same as those in Embodiment 1, except that the type of the prelithiation agent in the positive electrode film layer is different.

Differences between Embodiment 1 to Embodiment 5 and Comparative Example 1 are shown in Table 1.

**Table 1**

| | **Positive electrode sheet** | | | | **Battery cell** | | |
|---|---|---|---|---|---|---|---|
| | **Prelithiation agent** | | | | **Energy density (Wh/L)** | **Capacity retention rate at 1000cls (%)** | **Capacity retention rate after storage at 45°C for 150 days (%)** |
| | **Type** | **Maximum diameter (µm)** | **Minimum diameter (µm)** | **Aspect ratio** | | | |
| **Comparative Example 1** | \ | \ | \ | \ | 418 | 90.5 | 85.7 |
| **Embodiment 1** | Li₂NiO₂ | 11.1 | 6.1 | 1.8 | 420 | 94.3 | 91.2 |
| **Embodiment 2** | Li₂NiO₂ | 10.5 | 8.8 | 1.2 | 418 | 93.5 | 90.3 |
| **Embodiment 3** | Li₂NiO₂ | 10.9 | 7.3 | 1.5 | 420 | 94.1 | 90.7 |
| **Embodiment 4** | Li₂NiO₂ | 11.7 | 4.7 | 2.5 | 420 | 93 | 88.6 |
| **Embodiment 5** | Li₅FeO₄ | 11.1 | 6.1 | 1.8 | 425 | 93.9 | 90.8 |

Differences between Embodiment 1 and Comparative Example 2 are shown in Table 2.

**Table 2**

| | **Electrolyte additive** | | | | | | **Battery cell** | | |
|---|---|---|---|---|---|---|---|---|---|
| | **Mass percentage of LiDFP (%)** | **Mass percentage of FEC (%)** | **Mass percentage of LIDFOB (%)** | **Mass percentage of LIBF₄ (%)** | **Total mass percentage of fluorine-containing additive (%)** | **Mass percentage of PS (%)** | **Energy density (Wh/L)** | **Capacity retention rate at 1000cls (%)** | **Capacity retention rate after storage at 45°C for 150 days (%)** |
| **Comparative Example 2** | \ | \ | \ | \ | \ | \ | 410 | 85.1 | 80.4 |
| **Embodiment 1** | 0.039 | 0.23 | 0.0246 | 0.0091 | 0.2637 | 0.54 | 420 | 94.3 | 91.2 |

It can be learned from comparison of Embodiment 1 to Embodiment 4 and Comparative Example 1 and Comparative Example 2 that the battery cell provided in the present application not only has a high energy density, but also exhibits a high cycle capacity retention rate and a high storage capacity retention rate, that is, the battery cell has a high energy density, and exhibits excellent cycle performance and storage performance. It indicates that in the present application, by incorporating the prelithiation agent into the positive electrode sheet, the decomposition of the prelithiation agent in the formation stage can compensate for lithium ions consumed for forming the SEI film, thereby improving the energy density of the battery. The electrolyte includes a phosphorus-containing additive, a fluorine-containing additive, and a sulfur-containing additive. Under a high voltage condition, these types of additives can preferentially decompose to form stable CEI and SEI films, thereby lowering the risk of oxidative decomposition of the electrolyte, improving the stability of the electrolyte under the high voltage condition, and prolonging the cycle life and storage life of the battery.

It can be learned from Embodiment 1 and Embodiment 5 that the energy density of the battery cell can be improved by adding an appropriate amount of different types of prelithiation agents, and then the battery cell with a high energy density and a long life can be obtained by adding an additive with a high HOMO energy level into the electrolyte.

### Embodiment 6 and Embodiment 7

The positive electrode sheet and the negative electrode sheet in the battery cell are the same as those in Embodiment 1, except that the total content of additives in the electrolyte is different, as shown in Table 3.

**Table 3**

| | **Electrolyte additive** | | | | | | **Battery cell** | | |
|---|---|---|---|---|---|---|---|---|---|
| | **Mass percentage of LiDFP (%)** | **Mass percentage of FEC (%)** | **Mass percentage of LIDFOB (%)** | **Mass percentage of LIBF₄ (%)** | **Total mass percentage of fluorine-containing additive (%)** | **Mass percentage of PS (%)** | **Energy density (Wh/L)** | **Capacity retention rate at 1000cls (%)** | **Capacity retention rate after storage at 45°C for 150 days (%)** |
| **Embodiment 1** | 0.039 | 0.23 | 0.0246 | 0.0091 | 0.2637 | 0.54 | 420 | 94.3 | 91.2 |
| **Embodiment 6** | 0.01 | 0.05 | 0.015 | 0.005 | 0.07 | 0.12 | 420 | 91.1 | 86.4 |
| **Embodiment 7** | 0.05 | 0.55 | 0.13 | 0.05 | 0.73 | 1.32 | 420 | 94.1 | 91.5 |

It can be learned from comparison of Embodiment 1, Embodiment 6, and Embodiment 7 that by adjusting the content of the additive in the electrolyte, the stability of the electrolyte at a high voltage can be improved, thereby lowering the risk of decomposition of the electrolyte at the high voltage, and prolonging the cycle life of the battery cell.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery cell, comprising:
a positive electrode sheet, wherein the positive electrode sheet comprises a positive electrode current collector and a positive electrode film layer located on at least one side of the positive electrode current collector, and the positive electrode film layer comprises a plurality of first areas and a plurality of second areas;
the first areas comprise a positive electrode active material, the first areas comprise iron and phosphorus, and the molar ratio of the phosphorus to the iron is 0.5-1.5;
the second areas comprise a prelithiation agent, the second areas comprise the phosphorus and a transition metal M, the transition metal M comprises one or more of Ni, Co, V, Cr, Mn, Fe, Mo, Cu, and Zn, and the molar ratio of the phosphorus to the transition metal M is a, wherein 0 ≤ a ≤ 0.2;
a negative electrode sheet, wherein the negative electrode sheet comprises a negative electrode current collector and a negative electrode film layer located on at least one side of the negative electrode current collector; and
an electrolyte, wherein the electrolyte comprises an additive, the additive comprises one or more of a phosphorus-containing additive, a fluorine-containing additive, and a sulfur-containing additive, and on the basis of the total mass of the electrolyte, the sum of the mass of the phosphorus-containing additive, the fluorine-containing additive, and the sulfur-containing additive accounts for 0.2-2.1%.

2. The battery cell according to claim 1, wherein the positive electrode active material comprises lithium iron phosphate, and in a sectional view in the thickness direction of the positive electrode sheet, a maximum diameter of the lithium iron phosphate is less than a minimum diameter of the prelithiation agent.

3. The battery cell according to claim 1 or 2, wherein the ratio of a maximum diameter of the prelithiation agent to the minimum diameter of the prelithiation agent is 1.2-2.5.

4. The battery cell according to any one of claims 1 to 3, wherein the prelithiation agent comprises LiₓM_{y}O_{z}, 1 ≤ x ≤ 5, 1 ≤ y ≤ 3, and 2 ≤ z ≤ 8.

5. The battery cell according to any one of claims 1 to 3, wherein the prelithiation agent comprises one or both of Li₂NiO₂ and Li₅FeO₄.

6. The battery cell according to any one of claims 1 to 3, wherein the prelithiation agent comprises one or both of LiₙNiOₘ and LiₑFeO_{f}, 0 < m ≤ 2, 0 ≤ n ≤ 2, 0 ≤ e ≤ 5, and 0 < f ≤ 4.

7. The battery cell according to any one of claims 1 to 3, wherein the prelithiation agent comprises one or both of NiOₘ and LiₚFeO_{q}, 0 < m ≤ 2, 0 ≤ p ≤ 1, and 0 < q ≤ 2.

8. The battery cell according to any one of claims 1 to 7, wherein the electrolyte further comprises an electrolyte salt, and the molar concentration of the electrolyte salt in the electrolyte is 1.1-1.5 mol/L.

9. The battery cell according to claim 8, wherein the electrolyte salt comprises one or both of lithium hexafluorophosphate and fluorine-containing lithium sulfonimide.

10. The battery cell according to any one of claims 1 to 9, wherein the negative electrode film layer comprises a negative electrode active material, and the negative electrode active material comprises graphite.

11. The battery cell according to any one of claims 1 to 10, wherein a compaction density of the positive electrode film layer is 2.2-2.6 g/cm³, and optionally 2.4-2.5 g/cm³.

12. The battery cell according to any one of claims 1 to 11, wherein the coating weight of the positive electrode film layer is 20-60 mg/cm², and optionally 40-50 mg/cm².

13. The battery cell according to any one of claims 10 to 12, wherein the degree of graphitization of the graphite is 93-97%, and optionally 93-96%.

14. The battery cell according to any one of claims 10 to 13, wherein the volume mean diameter Dv50 of the graphite is 8-20 µm, and optionally 10-16 µm.

15. The battery cell according to any one of claims 1 to 14, wherein a compaction density of the negative electrode film layer is 1.3-1.7 g/cm³, and optionally 1.4-1.6 g/cm³.

16. The battery cell according to any one of claims 1 to 15, wherein the coating weight of the negative electrode film layer is 10-26 mg/cm², and optionally 15-20 mg/cm².

17. The battery cell according to any one of claims 1 to 16, wherein the electrolyte further comprises a solvent, the solvent comprises a cyclic carbonate and a linear carbonate, and on the basis of the total mass of the electrolyte, the mass percentage of the cyclic carbonate is 15-25%, and the mass percentage of the linear carbonate is 50-70%.

18. The battery cell according to claim 17, wherein the cyclic carbonate comprises ethylene carbonate.

19. The battery cell according to claim 17 or 18, wherein the linear carbonate comprises one or both of dimethyl carbonate and ethyl methyl carbonate.

20. The battery cell according to any one of claims 1 to 19, wherein the additive further comprises a carbonate-based additive, and the carbonate-based additive comprises one or more of vinylene carbonate, propylene carbonate, and vinyl ethylene carbonate.

21. The battery cell according to claim 20, wherein on the basis of the total mass of the electrolyte, the mass percentage of the carbonate-based additive is 2-5%, and optionally 3-4%.

22. The battery cell according to any one of claims 1 to 21, wherein on the basis of the total mass of the electrolyte, the mass percentage of the phosphorus-containing additive is 0.01-0.05%.

23. The battery cell according to any one of claims 1 to 22, wherein on the basis of the total mass of the electrolyte, the mass percentage of the fluorine-containing additive is 0.05-0.5%.

24. The battery cell according to any one of claims 1 to 23, wherein on the basis of the total mass of the electrolyte, the mass percentage of the sulfur-containing additive is 0.1-2%.

25. The battery cell according to any one of claims 1 to 24, wherein the phosphorus-containing additive comprises one or more of lithium difluorophosphate, tris(trimethylsilyl) phosphate, triphenylphosphine oxide, triethyl phosphate, trimethylolpropane, and trifluoroethyl vinyl phosphate.

26. The battery cell according to any one of claims 1 to 25, wherein the fluorine-containing additive comprises one or more of fluoroethylene carbonate, difluoroethylene carbonate, perfluoroalkyl ethylene carbonate, tris(trimethylsilyl) borate, lithium tetrafluoroborate, lithium bis(oxalato)borate, and lithium difluoro(oxalato)borate.

27. The battery cell according to any one of claims 1 to 26, wherein the sulfur-containing additive comprises one or more of ethylene sulfite, propylene sulfite, ethylene sulfate, 4-methyl ethylene sulfite, and 1,3-propanesultone.

28. The battery cell according to any one of claims 2 to 27, wherein the lithium iron phosphate has a unimodal particle size distribution and a particle size distribution span of 1.5-1.7.

29. The battery cell according to any one of claims 1 to 28, wherein on the basis of the total mass of the positive electrode film layer, the mass percentage of the positive electrode active material is 90-98%, and the mass percentage of the prelithiation agent is 0.5-8%.

30. The battery cell according to any one of claims 1 to 29, wherein at least part of a surface of the positive electrode active material has a first carbon coating layer, and on the basis of the total mass of the positive electrode active material, the mass percentage of the first carbon coating layer is 0.5-1.5%.

31. The battery cell according to any one of claims 1 to 30, wherein at least part of a surface of the prelithiation agent has a second carbon coating layer, and on the basis of the total mass of the prelithiation agent, the mass percentage of the second carbon coating layer is 1-5%, and optionally 2-4%.

32. The battery cell according to any one of claims 1 to 31, wherein the positive electrode film layer further comprises a conductive agent, and the conductive agent comprises one or more of superconducting carbon, acetylene black, carbon black, Ketjen black, carbon dots, carbon nanotubes, graphene, and carbon nanofibers.

33. The battery cell according to any one of claims 1 to 32, further comprising: a separator, wherein the separator comprises:
a base film, comprising polyethylene;
a binding layer, located on at least one side of the base film; and
a ceramic layer, located on a side of the binding layer away from the base film.

34. The battery cell according to claim 33, wherein the separator is arranged between the positive electrode sheet and the negative electrode sheet, and the ceramic layer is close to the positive electrode sheet.

35. The battery cell according to any one of claims 1 to 34, wherein a volumetric energy density of the battery cell is greater than or equal to 410 Wh/L.

36. The battery cell according to any one of claims 1 to 35, wherein the volumetric energy density of the battery cell is greater than or equal to 420 Wh/L.

37. A battery device, comprising the battery cell according to any one of claims 1 to 36.

38. An electric device, comprising the battery cell according to any one of claims 1 to 36, wherein the battery cell is configured to provide electric energy.
